# EUROPÄISCHE PATENTSCHRIFT

(11) **EP 3 565 082 B1**
(45) Veröffentlichungstag und Bekanntmachung des Hinweises auf die Patenterteilung: **10.11.2021**
(21) Anmeldenummer: 19171832.9
(22) Anmeldetag: 30.04.2019
(51) Int. Cl.: H02J 7/00, H02J 7/35

(54) **AUTONOMES DRAHTLOSES SENSORGERÄT UND ZUGEHÖRIGES ANLAUFVERFAHREN**
AUTONOMOUS WIRELESS SENSOR DEVICE AND CORRESPONDING STARTUP METHOD
APPAREIL DE DÉTECTION AUTONOME SANS FIL ET PROCÉDÉ DE DÉMARRAGE ASSOCIÉ

(30) Priorität: 04.05.2018 DE 102018110785
(43) Veröffentlichungstag der Anmeldung: 06.11.2019
(73) Patentinhaber: ABB Schweiz AG, 5400 Baden (CH)
(72) Erfinder: Ahrend, Ulf, 76185 Karlsruhe (DE); Decker, Andreas, 49377 Vechta (DE); Gebhardt, Jörg, 55130 Mainz (DE); Sosale, Guruprasad, 80997 München (DE); Kaul, Holger, 68165 Mannheim (DE); Mendoza, Francisco, 69198 Schriesheim (DE); Rodenbusch-Mohr, Thomas, 68161 Mannheim (DE); Beniston, John, 69231 Rauenberg (DE)
(74) Vertreter: Zimmermann & Partner Patentanwälte mbB

(56) Entgegenhaltungen:
- EP-A1- 3 089 312
- WO-A1-2016/073944
- JP-A- S62 154 122
- US-A1- 2013 181 655
- US-A1- 2015 008 872

## Beschreibung

### Technisches Gebiet der Erfindung

Die Erfindung betrifft ein autonomes drahtloses Sensorgerät und ein zugehöriges Anlaufverfahren.

### Stand der Technik

Autonome drahtlose Sensorgeräte sind bereits bekannt. Sie weisen eine Energiequelle und Energiesenken auf. Bei dieser Energiequelle handelt es sich beispielsweise um einen Energiesammler. Energiesammler werden auch als Harvester bezeichnet. Zu diesen Harvestern gehören beispielsweise Photovoltaik-Harvester, Thermo-Harvester und induktive Harvester. Bei diesen Harvestern kann die bereitgestellte Leistung und Ausgangsspannung in einer Anwendung stark variieren, beispielsweise bei unterschiedlicher Lichteinstrahlung auf der Solarzelle. Harvester-Energiequellen sind über einen Leistungsmanager und einen wiederaufladbaren Speicher mit den Energiesenken des jeweiligen Sensorgerätes verbunden. Der Leistungsmanager ist unter anderem dazu vorgesehen, eine Impedanzanpassung durchzuführen und eine Spannungsumsetzung mittels eines Gleichspannungswandlers vorzunehmen und Energie in einem wiederaufladbaren Energiespeicher zu speichern. Zum Anlaufen des Leistungsmanagers ist ein Mindestenergieniveau im wiederaufladbaren Energiespeicher notwendig, welches vom Energiesammler bereitgestellt werden muss. Bis das zum Anlaufen des Leistungsmanagers benötigte Mindestenergieniveau angesammelt wurde, kann unerwünscht viel Zeit vergehen. Dies ist beispielsweise dann der Fall, wenn die Ausgangsspannung des Energiesammlers niedriger ist als 400 mV und die Ausgangsspannung des Gleichspannungswandlers des Leistungsmanagers größer ist als die Eingangsspannung. In diesem Fall sorgt beispielsweise eine Ladepumpe, die zusammen mit einem Aufwärtswandler integrierter Bestandteil des Leistungsmanagers sein kann, für Abhilfe. Wenn jedoch in dieser Anlaufphase vom Energiesammler nicht genügend Leistung bereitgestellt werden kann, dann kann der Leistungsmanager seinen Betrieb nicht aufnehmen, so dass auch kein Laden des wiederaufladbaren Energiespeichers erfolgen kann. Die vom Energiesammler gelieferte Energie geht verloren.

Aus der EP 3 089 312 A1 ist ein Anlaufverfahren für eine autonome drahtlose Sensorvorrichtung bekannt, die einen Energie-Sammler, einen mit dem Energiesammler verbundenen Leistungsmanager, einen mit dem Leistungsmanager verbundenen wiederaufladbaren Energiespeicher und mit dem wiederaufladbaren Energiespeicher verbundene Energiesenken aufweist. Bei diesem Verfahren erfolgt ein Abtrennen des Leistungsmanagers vom Ausgang des Energiesammlers, ein Verbinden des wiederaufladbaren Energiespeichers mit dem Energiesammler über einen Ladekanal, der parallel zum Leistungsmanager angeordnet ist, ein Vergleichen des Ladezustands des Energiespeichers mit einem vorgegebenen Schwellenwert und ein Verbinden des Leistungsmanagers mit dem Ausgang des Energiesammlers, wenn der Ladezustand des Energiespeichers den vorgegebenen Schwellenwert überschreitet.

Aus der US 2013/0181655 A1 ist ein Anlaufverfahren für eine Vorrichtung bekannt, die eine Solarbatterie, einen mit der Solarbatterie verbundenen Spannungskonverter, eine mit dem Spannungskonverter verbundene Speicherbatterie und mit der Speicherbatterie verbundene Energiesenken aufweist. Bei diesem Verfahren erfolgt ein Abtrennen des Spannungskonverters vom Ausgang der Solarbatterie, ein Verbinden der Speicherbatterie mit der Solarbatterie über einen Ladekanal, der parallel zum Spannungskonverter angeordnet ist, ein Vergleichen des Ladezustands der Speicherbatterie mit einem vorgegebenen Schwellenwert und ein Verbinden des Spannungskonverters mit dem Ausgang der Solarbatterie, wenn der Ladezustand der Speicherbatterie den vorgegebenen Schwellenwert überschreitet.

Aus der JP S62 154 122 A1 ist ein Ladekontrollsystem einer Solargeneratorvorrichtung bekannt, welche eine Solarbatterie, einen Gleichspannungswandler und einen über einen Schalter mit dem Gleichspannungswandler verbundenen Akkumulator aufweist.

### Zusammenfassung der Erfindung

Die Aufgabe der Erfindung besteht darin, das Anlaufen eines autonomem drahtlosen Sensorgerätes zu verbessern.

Diese Aufgabe wird durch ein Anlaufverfahren mit den im Anspruch 1 angegebenen Merkmalen gelöst. Eine vorteilhafte Weiterbildung dieses Verfahrens ist im abhängigen Anspruch 2 angegeben. Die Ansprüche 3 bis 11 haben ein autonomes drahtloses Sensorgerät zum Gegenstand. Der Anspruch 12 betrifft eine bevorzugte Verwendung des erfindungsgemäßen autonomen drahtlosen Sensorgerätes.

Das im Anspruch 1 angegebene Anlaufverfahren für ein autonomes drahtloses Sensorgerät, welches einen Energiesammler, einen mit dem Energiesammler verbundenen, einen Gleichspannungswandler aufweisenden Leistungsmanager, einen mit dem Leistungsmanager verbundenen wiederaufladbaren Energiespeicher und an den wiederaufladbaren Energiespeicher angeschlossene Energiesenken aufweist, umfasst die folgenden Schritte:
- Abtrennen des Leistungsmanagers vom Ausgang des Energiesammlers,
- Verbinden des wiederaufladbaren Energiespeichers mit dem Energiesammler über einen parallel zum Leistungsmanager angeordneten Ladekanal,
- Erhöhung der am Ausgang des Energiesammlers (2) bereitgestellten Spannung im Ladekanal (14) mittels einer Ladepumpe (11) oder eines Aufwärtswandlers (13),-Vergleichen des Ladezustands des Energiespeichers mit einem vorgegebenen Schwellenwert,
- Verbinden des Leistungsmanagers mit dem Ausgang des Energiesammlers, wenn der Ladezustand des Energiespeichers den vorgegebenen Schwellenwert überschreitet, und
- Abtrennen des Ladekanals sowohl vom Energiesammler als auch vom wiederaufladbaren Energiespeicher, wenn ein an einem Ladezustandspin des Gleichspannungswandlers bereitgestelltes Bestätigungssignal anzeigt, dass der Leistungsmanager seinen Arbeitsbetrieb aufgenommen hat.

Die Vorteile der Erfindung bestehen insbesondere darin, dass das Laden des aufladbaren Energiespeichers bereits zu einem früheren Zeitpunkt beginnen kann als beim Stand der Technik. Insbesondere muss mit dem Beginnen des Ladens des aufladbaren Energiespeichers nicht abgewartet werden, bis der Energiesammler die zum Anlaufen des Leistungsmanagers benötigte Energie zur Verfügung gestellt hat. Aufgrund des genannten früheren Beginns des Ladens des aufladbaren Energiespeichers kann dieser auch schon zu einem früheren Zeitpunkt Energie bereitstellen, die von den Energiesenken des autonomen drahtlosen Sensorgerätes zu deren Betrieb benötigt wird.

Gemäß einer Ausführungsform der Erfindung erfolgt ein Abtrennen des wiederaufladbaren Energiespeichers vom Energiesammler durch Unterbrechen des Ladekanals. Dieses Unterbrechen des Ladekanals wird vorzugsweise unter Verwendung eines ersten Schalters durchgeführt.

Gemäß der Erfindung erfolgt eine Erhöhung der am Ausgang des Energiesammlers bereitgestellten Spannung im Ladekanal mittels einer Ladungspumpe. Der Vorteil der Verwendung einer Ladepumpe im Ladekanal besteht darin, dass diese Ladepumpe bereits bei einem niedrigeren Energieniveau und damit zu einem früheren Zeitpunkt zu arbeiten beginnt als der Leistungsmanager des autonomen drahtlosen Sensorgerätes.

Alternativ erfolgt eine Erhöhung der am Ausgang des Energiesammlers bereitgestellten Spannung im Ladekanal mittels eines Aufwärtswandlers. Der Vorteil der Verwendung eines Aufwärtswandlers im Ladekanal besteht ebenfalls darin, dass der Aufwärtswandler bereits bei einem niedrigeren Energieniveau zu arbeiten beginnt als der Leistungsmanager des autonomen drahtlosen Sensorgerätes.

Gemäß einer Ausführungsform der Erfindung wird ein autonomes drahtloses Sensorgerät bereitgestellt, welches einen Energiesammler, einen mit dem Energiesammler verbundenen, einen Gleichspannungswandler aufweisenden Leistungsmanager, einen mit dem Leistungsmanager verbundenen wiederaufladbaren Energiespeicher, an den wiederaufladbaren Energiespeicher angeschlossene Energiesenken und einen parallel zum Leistungsmanager angeordneten Ladekanal aufweist, der zwischen dem Ausgang des Energiesammlers und dem wiederaufladbaren Energiespeicher angeordnet ist, eine Ladepumpe oder einen Aufwärtswandler aufweist und vom Ausgang des Energiesammlers abtrennbar und mit dem Ausgang des Energiesammlers verbindbar ist.

Gemäß einer Ausführungsform der Erfindung weist der Ladekanal einen mit dem Ausgang des Energiesammlers verbundenen ersten Schalter auf.

Gemäß einer Ausführungsform der Erfindung weist der Ladekanal einen mit dem Eingang des wiederaufladbaren Energiespeichers verbundenen zweiten Schalter auf.

Gemäss der Erfindung ist im Ladekanal eine Ladepumpe vorgesehen.

Alternativ ist im Ladekanal ein Aufwärtswandler vorgesehen.

Gemäß einer Ausführungsform der Erfindung ist im Ladekanal vor dem Aufwärtswandler ein Transformator vorgesehen.

Gemäß einer Ausführungsform der Erfindung weist der Leistungsmanager Impedanzanpassungsmittel und einen Spannungswandler auf.

Gemäß einer Ausführungsform der Erfindung ist zwischen dem Ausgang des Energiesammlers und dem Leistungsmanager ein dritter Schalter angeordnet.

Gemäß einer Ausführungsform der Erfindung sind die Energiesenken über eine Spannungswandlerbaugruppe mit dem aufladbaren Energiespeicher verbunden.

Gemäß einer Ausführungsform der Erfindung weist die Spannungswandlerbaugruppe mehrere parallel oder in Reihe zueinander geschaltete Spannungswandler auf.

Gemäß einer Ausführungsform der Erfindung liegt der Gesamtenergiebedarf der Energiesenken im Bereich von 10 µW bis 1 mW.

### Kurze Beschreibung der Zeichnungen

Die Figur 1 zeigt eine Blockdarstellung eines ersten Ausführungsbeispiels für ein autonomes drahtloses Sensorgerät gemäß der Erfindung.

Die Figur 2 zeigt eine Blockdarstellung eines zweiten Ausführungsbeispiels für ein autonomes drahtloses Sensorgerät gemäß der Erfindung.

Die Figur 3 zeigt eine Blockdarstellung eines dritten Ausführungsbeispiels für ein autonomes drahtloses Sensorgerät gemäß der Erfindung.

Die Figur 4 zeigt eine Blockdarstellung einer alternativen Ausführungsform für einen Ladekanal.

### Ausführliche Beschreibung der Erfindung anhand der Zeichnungen

Autonome drahtlose Sensorgeräte weisen oftmals einen Energiesammler als Energiequelle, einen mit dem Energiesammler verbundenen Leistungsmanager, einen mit dem Leistungsmanager verbundenen wiederaufladbaren Energiespeicher und an den wiederaufladbaren Energiespeicher angeschlossene Energiesenken auf, die vom Energiespeicher mit der von ihnen benötigten Versorgungsgleichspannung versorgt werden. Da zu Beginn einer Anlaufphase eines derartigen autonomen drahtlosen Sensorgerätes am Ausgang des Energiesammlers die vom Leistungsmanager benötigte Energie noch nicht zur Verfügung gestellt werden kann, kann der Leistungsmanager nicht sofort anlaufen bzw. seinen Betrieb aufnehmen, so dass der wiederaufladbare Energiespeicher noch nicht geladen werden kann. Die Erfindung stellt autonome drahtlose Sensorgeräte bereit, bei denen der Ladevorgang des wiederaufladbaren Energiespeichers bereits zu einem früheren Zeitpunkt beginnen kann als bei bekannten autonomen drahtlosen Sensorgeräten. Dies wird durch die Verwendung eines Ladekanals ermöglicht, der parallel zum Leistungsmanager angeordnet ist und bereits in der Anlaufphase, in welcher der Leistungsmanager noch nicht arbeitsfähig ist, den Beginn des Ladens des wiederaufladbaren Speichers ermöglicht.

Zu den genannten Energiesenken eines autonomen drahtlosen Sensorgerätes gehören insbesondere verschiedene Sensoren, Datenspeicher und Messschaltungen. Zu den Sensoren gehören beispielsweise ein Temperatursensor, ein Drucksensor, ein Feuchtigkeitssensor, ein Helligkeitssensor, ein Gassensor, ein Partikelsensor, ein akustischer Sensor, ein Magnetfeldsensor, ein Bewegungsdetektor und/oder ein oder mehrere mikroelektromechanische weitere Sensoren.

Ein derartiges Sensorgerät ist vorzugsweise zu einer Verwendung im Bereich der Gebäudeautomation ausgebildet. Bei einem derartigen Sensorgerät handelt es sich um ein Niedrigenergiegerät, dessen gesamter Leistungsbedarf im Bereich von 10 µW bis 1mW liegt.

Nachfolgend werden Beispiele für derartige autonome drahtlose Sensorgeräte und deren Arbeitsweise insbesondere in der Anlaufphase anhand der Figuren näher erläutert.

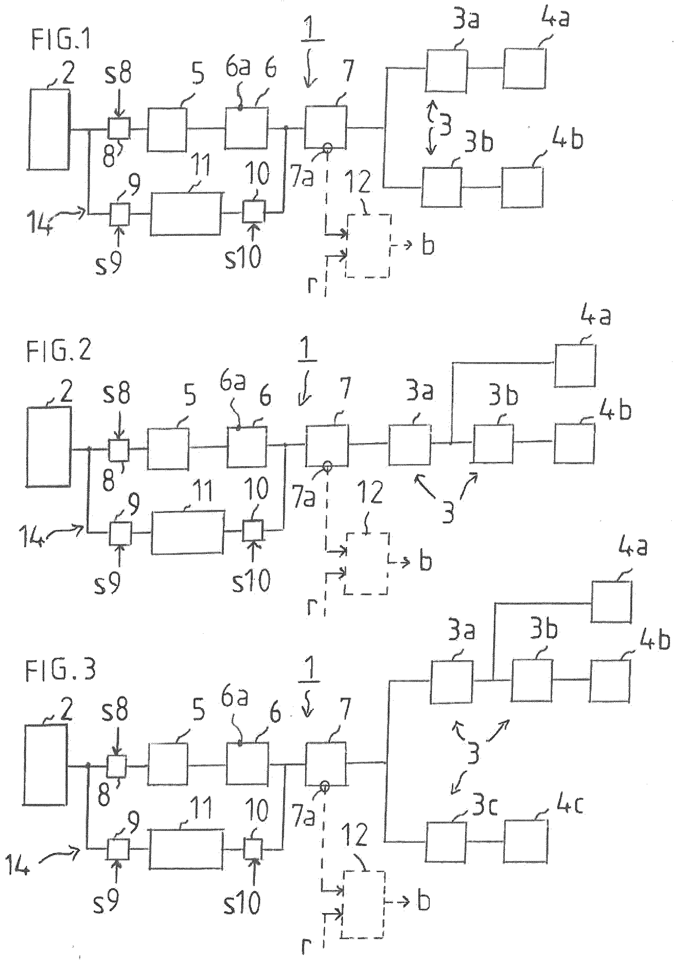

Die Figur 1 zeigt eine Blockdarstellung eines ersten Ausführungsbeispiels für ein autonomes drahtloses Sensorgerät gemäß der Erfindung. Dieses Sensorgerät 1 weist einen Energiesammler 2, eine Gleichspannungswandlerbaugruppe 3 und Energiesenken 4a und 4b auf. Der Energiesammler ist beispielsweise ein Energiesammler, der mindestens eine Photovoltaikzelle aufweist. Am Ausgang des Energiesammlers 2 steht entweder direkt eine Gleichspannung oder eine gleichgerichtete Wechselspannung zur Verfügung. Diese Gleichspannung wird über einen Leistungsmanager, der Impedanzanpassungsmittel 5 und einen ersten Gleichspannungswandler 6 aufweist, einem wiederaufladbaren Energiespeicher 7 zur Verfügung gestellt und im Normalbetrieb des autonomen drahtlosen Sensorgerätes, d.h. nach Beendigung der Anlaufphase, zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei parallel zueinander angeordnete Gleichspannungswandler 3a und 3b aufweist. Jeder dieser Gleichspannungswandler stellt an seinem Ausgang eine andere Gleichspannung zur Verfügung.

An den Ausgang des Gleichspannungswandlers 3a ist die Energiesenke 4a angeschlossen, an den Ausgang des Gleichspannungswandlers 3b die Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 1 gezeigten Ausführungsbeispiel parallel zueinander vorgesehene Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Energiesenken eines Sensorgerätes minimal benötigte Versorgungsgleichspannungen handelt.

Alternativ zu dem in der Figur 1 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 1 dargestellten Ausführungsbeispiel besteht darin, drei oder mehr parallel zueinander angeordnete Gleichspannungswandler vorzusehen, um drei oder mehr verschiedene Gleichspannungen bereitzustellen, die jeweils einer oder mehreren Energiesenken zur Verfügung gestellt werden, um diese mit der jeweils benötigten minimalen Versorgungsgleichspannung zu versorgen.

Um in der Anlaufphase des vorstehend beschriebenen autonomen drahtlosen Sensorgerätes dafür Sorge zu tragen, dass das Laden des aufladbaren Energiespeichers 7 bereits zu einem früheren Zeitpunkt begonnen werden kann als bei bekannten Vorrichtungen, weist das autonome drahtlose Sensorgerät des Weiteren einen Ladekanal 14 auf. Dieser Ladekanal 14 ist parallel zum Leistungsmanager, zu welchem die Impedanzanpassungsmittel 5 und der Gleichspannungswandler 6 gehören, angeordnet. Er weist in seinem Eingangsbereich, der an den Ausgang des Energiesammlers 2 angeschlossen ist, einen ersten Schalter 9 auf. Bei durchlässig geschaltetem erstem Schalter 9 ist der Ladekanal 14 über den ersten Schalter 9 mit dem Ausgang des Energiesammlers 2 verbunden. Bei geöffnetem erstem Schalter ist der Ladekanal 14 mittels des Schalters 9 vom Ausgang des Energiesammlers 2 getrennt. Des Weiteren weist der Ladekanal 14 in seinem Ausgangsbereich, der an den wiederaufladbaren Energiespeicher 7 angeschlossen ist, einen zweiten Schalter 10 auf. Bei durchlässig geschaltetem zweitem Schalter 10 ist der Ladekanal 14 über den zweiten Schalter 10 mit dem wiederaufladbaren Energiespeicher 7 verbunden. Bei geöffnetem zweitem Schalter 10 ist der Ladekanal 14 mittels des zweiten Schalters 10 vom wiederaufladbaren Energiespeicher 7 getrennt. Zwischen dem ersten Schalter 9 und dem zweiten Schalter 10 ist im Ladekanal 14 eine Ladepumpe 11 angeordnet, mittels welcher bei durchlässig geschalteten Schaltern 9 und 10 die vom Energiesammler 2 bereitgestellte Gleichspannung auf einen höheren Spannungswert umgesetzt werden kann. Mit dieser Gleichspannung, die einen höheren Spannungswert aufweist, wird in der Anlaufphase des autonomen drahtlosen Sensorgerätes der wiederaufladbare Energiespeicher 7 geladen. Des Weiteren weist das in der Figur 1 dargestellte autonome drahtlose Sensorgerät zwischen dem Ausgang des Energiesammlers 2 und dem Leistungsmanager 5,6 einen dritten Schalter 8 auf. Bei geöffnetem drittem Schalter 8 ist der Energiemanager vom Ausgang des Energiesammlers abgetrennt. Dies ist in der Anlaufphase der Fall. Bei durchlässig geschaltetem drittem Schalter 8 ist der Leistungsmanager 5,6 mit dem Ausgang des Energiesammlers verbunden. Dies ist nach Beendigung der Anlaufphase der Fall.

Des Weiteren ist aus der Figur 1 ersichtlich, dass der Gleichspannungswandler 6 einen Ladezustandspin 6a aufweist, an welchem ein Bestätigungssignal ausgegeben wird, sobald der Leistungsmanager 5, 6 arbeitet. Ferner ist aus der Figur 1 ersichtlich, dass an den wiederaufladbaren Energiespeicher 7 ein vom wiederaufladbaren Energiespeicher 7 spannungsversorgter Komparator 12 angeschlossen ist, welcher ein an einem Ladezustandspin 7a bereitgestelltes Ladezustandssignal des wiederaufladbaren Energiespeichers mit einem internen Referenzsignal r vergleicht.

Übersteigt das Ladezustandssignal das interne Referenzsignal, dann zeigt dies an, dass der wiederaufladbare Energiespeicher 7 einen Ladezustand erreicht hat, welcher darauf schließen lässt, dass der Energiesammler 2 an seinem Ausgang ein Gleichspannungssignal bereitstellt, das eine Inbetriebnahme des Leistungsmanagers ermöglicht. Dies wird durch das am Ausgang des Komparators 12 bereitgestellte Bestätigungssignal b bestätigt. Das Ausgangssignal des Komparators 12 wird dazu verwendet, dem dritten Schalter 8 ein Steuersignal s8 zuzuführen, welches diesen in seinen leitenden Zustand bringt, so dass der Leistungsmanager 5,6 über den leitenden Schalter 8 mit dem Ausgang des Energiesammlers 2 verbunden ist. Wird dann auch durch das am Ladezustandspin 6a des Gleichspannungswandlers 6 bereitgestellte Bestätigungssignal angezeigt, dass der Leistungsmanager 5,6 seinen Arbeitsbetrieb aufgenommen hat, dann werden den Schaltern 9 und 10 Steuersignale s9 und s10 zur Verfügung gestellt, durch welche diese Schalter geöffnet werden, so dass der Ladekanal 14 sowohl vom Energiesammler 2 als auch vom wiederaufladbaren Energiespeicher 7 abgetrennt wird. Damit ist die Anlaufphase beendet und die Energieversorgung des wiederaufladbaren Energiespeichers 7 erfolgt über den Energiemanager, der die Impedanzanpassungsmittel 5 und den Spannungswandler 6 aufweist.

Der wesentliche Vorteil der vorstehend beschriebenen Vorgehensweise besteht darin, dass die Ladepumpe 11 bereits bei niedrigerer Ausgangsgleichspannung des Energiesammlers und damit zu einem früheren Zeitpunkt in der Anlaufphase arbeitet als der Energiemanager. Somit kann in der Anlaufphase des autonomen drahtlosen Sensorgerätes durch eine Verwendung des oben beschriebenen Ladekanals bereits zu einem früheren Zeitpunkt mit dem Aufladen des wiederaufladbaren Energiespeichers begonnen werden als ohne Verwendung eines derartigen Ladekanals. Dies wiederum hat zur Folge, dass auch den an den wiederaufladbaren Energiespeicher angeschlossenen Energiesenken des autonomen drahtlosen Sensorgerätes bereits zu einem früheren Zeitpunkt die von ihnen jeweils benötigte Versorgungsgleichspannung zur Verfügung gestellt werden kann als bei bekannten autonomen drahtlosen Sensorvorrichtungen.

Die Figur 2 zeigt eine Blockdarstellung eines zweiten Ausführungsbeispiels für ein autonomes drahtloses Sensorgerät gemäß der Erfindung. Dieses Sensorgerät 1 weist einen Energiesammler 2, eine Gleichspannungswandlerbaugruppe 3 und Energiesenken 4a und 4b auf. Der Energiesammler ist beispielsweise ein Energiesammler, der mindestens eine Photovoltaikzelle aufweist. Am Ausgang des Energiesammlers 2 steht entweder direkt eine Gleichspannung oder eine gleichgerichtete Wechselspannung zur Verfügung. Diese Gleichspannung wird über einen Leistungsmanager, der Impedanzanpassungsmittel 5 und einen ersten Gleichspannungswandler 6 aufweist, einem wiederaufladbaren Energiespeicher 7 zur Verfügung gestellt und im Normalbetrieb des autonomen drahtlosen Sensorgerätes, d.h. nach Beendigung der Anlaufphase, zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei in Reihe zueinander angeordnete Gleichspannungswandler 3a und 3b aufweist. Jeder dieser Gleichspannungswandler stellt an seinem Ausgang eine andere Gleichspannung zur Verfügung.

An den Ausgang des Gleichspannungswandlers 3a ist die Energiesenke 4a angeschlossen, an den Ausgang des Gleichspannungswandlers 3b die Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 2 gezeigten Ausführungsbeispiel in Reihe geschaltete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Energiesenken eines Sensorgerätes minimal benötigte Versorgungsgleichspannungen handelt.

Alternativ zu dem in der Figur 2 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 2 dargestellten Ausführungsbeispiel besteht darin, drei oder mehr in Reihe geschaltete Gleichspannungswandler vorzusehen, um drei oder mehr verschiedene Gleichspannungen bereitzustellen, die jeweils einer oder mehreren Energiesenken zur Verfügung gestellt werden, um diese mit der jeweils benötigten minimalen Versorgungsgleichspannung zu versorgen.

Um in der Anlaufphase des vorstehend beschriebenen autonomen drahtlosen Sensorgerätes dafür Sorge zu tragen, dass das Laden des aufladbaren Energiespeichers 7 bereits zu einem früheren Zeitpunkt begonnen werden kann als bei bekannten Vorrichtungen, weist das autonome drahtlose Sensorgerät des Weiteren einen Ladekanal 14 auf. Dieser Ladekanal 14 ist parallel zum Leistungsmanager, zu welchem die Impedanzanpassungsmittel 5 und der Gleichspannungswandler 6 gehören, angeordnet. Er weist in seinem Eingangsbereich, der an den Ausgang des Energiesammlers 2 angeschlossen ist, einen ersten Schalter 9 auf. Bei durchlässig geschaltetem erstem Schalter 9 ist der Ladekanal 14 über den ersten Schalter 9 mit dem Ausgang des Energiesammlers 2 verbunden. Bei geöffnetem erstem Schalter ist der Ladekanal 14 mittels des Schalters 9 vom Ausgang des Energiesammlers 2 getrennt. Des Weiteren weist der Ladekanal 14 in seinem Ausgangsbereich, der an den wiederaufladbaren Energiespeicher 7 angeschlossen ist, einen zweiten Schalter 10 auf. Bei durchlässig geschaltetem zweitem Schalter 10 ist der Ladekanal 14 über den zweiten Schalter 10 mit dem wiederaufladbaren Energiespeicher 7 verbunden. Bei geöffnetem zweitem Schalter 10 ist der Ladekanal 14 mittels des zweiten Schalters 10 vom wiederaufladbaren Energiespeicher 7 getrennt. Zwischen dem ersten Schalter 9 und dem zweiten Schalter 10 ist im Ladekanal 14 eine Ladepumpe 11 angeordnet, mittels welcher bei durchlässig geschalteten Schaltern 9 und 10 die vom Energiesammler 2 bereitgestellte Gleichspannung auf einen höheren Spannungswert umgesetzt werden kann. Mit dieser Gleichspannung, die einen höheren Spannungswert aufweist, wird in der Anlaufphase des autonomen drahtlosen Sensorgerätes der wiederaufladbare Energiespeicher 7 geladen. Des Weiteren weist das in der Figur 1 dargestellte autonome drahtlose Sensorgerät zwischen dem Ausgang des Energiesammlers 2 und dem Leistungsmanager 5,6 einen dritten Schalter 8 auf. Bei geöffnetem drittem Schalter 8 ist der Energiemanager vom Ausgang des Energiesammlers abgetrennt. Dies ist in der Anlaufphase der Fall. Bei durchlässig geschaltetem drittem Schalter 8 ist der Leistungsmanager 5,6 mit dem Ausgang des Energiesammlers verbunden. Dies ist nach Beendigung der Anlaufphase der Fall.

Des Weiteren ist aus der Figur 2 ersichtlich, dass der Gleichspannungswandler 6 einen Ladezustandspin 6a aufweist, an welchem ein Bestätigungssignal ausgegeben wird, sobald der Leistungsmanager 5, 6 arbeitet. Ferner ist aus der Figur 2 ersichtlich, dass an den wiederaufladbaren Energiespeicher 7 ein vom wiederaufladbaren Energiespeicher 7 spannungsversorgter Komparator 12 angeschlossen ist, welcher ein an einem Ladezustandspin 7a bereitgestelltes Ladezustandssignal des wiederaufladbaren Energiespeichers mit einem internen Referenzsignal r vergleicht.

Übersteigt das Ladezustandssignal das interne Referenzsignal, dann zeigt dies an, dass der wiederaufladbare Energiespeicher 7 einen Ladezustand erreicht hat, welcher darauf schließen lässt, dass der Energiesammler 2 an seinem Ausgang ein Gleichspannungssignal bereitstellt, das eine Inbetriebnahme des Leistungsmanagers ermöglicht. Dies wird durch das am Ausgang des Komparators 12 bereitgestellte Bestätigungssignal b bestätigt. Das Ausgangssignal des Komparators 12 wird dazu verwendet, dem dritten Schalter 8, mittels welchem in der Anlaufphase der Energiemanager vom Energiesammler getrennt war, ein Steuersignal s8 zuzuführen, welches den dritten Schalter 8 in seinen leitenden Zustand bringt, so dass der Leistungsmanager 5,6 über den leitenden Schalter 8 mit dem Ausgang des Energiesammlers 2 verbunden ist. Wird dann auch durch das am Ladezustandspin 6a des Gleichspannungswandlers 6 bereitgestellte Bestätigungssignal angezeigt, dass der Leistungsmanager 5,6 seinen Arbeitsbetrieb aufgenommen hat, dann werden den Schaltern 9 und 10 Steuersignale s9 und s10 zur Verfügung gestellt, durch welche diese Schalter geöffnet werden, so dass der Anlaufkanal 14 sowohl vom Energiesammler 2 als auch vom wiederaufladbaren Energiespeicher 7 abgetrennt wird. Damit ist die Anlaufphase beendet und die Energieversorgung des wiederaufladbaren Energiespeichers 7 erfolgt über den Energiemanager, der die Impedanzanpassungsmittel 5 und den Spannungswandler 6 aufweist.

Der wesentliche Vorteil der vorstehend beschriebenen Vorgehensweise besteht darin, dass die Ladepumpe 11 bereits bei niedrigerer Ausgangsgleichspannung des Energiesammlers und damit zu einem früheren Zeitpunkt in der Anlaufphase arbeitet als der Energiemanager. Somit kann in der Anlaufphase des autonomen drahtlosen Sensorgerätes durch eine Verwendung des oben beschriebenen Ladekanals 14 bereits zu einem früheren Zeitpunkt mit dem Aufladen des wiederaufladbaren Energiespeichers begonnen werden als ohne Verwendung eines derartigen Ladekanals. Dies wiederum hat zur Folge, dass auch den an den wiederaufladbaren Energiespeicher angeschlossenen Energiesenken des autonomen drahtlosen Sensorgerätes bereits zu einem früheren Zeitpunkt die von ihnen jeweils benötigte Versorgungsgleichspannung zur Verfügung gestellt werden kann als bei bekannten autonomen drahtlosen Sensorvorrichtungen.

Die Figur 3 zeigt eine Blockdarstellung eines dritten Ausführungsbeispiels für ein autonomes drahtloses Sensorgerät gemäß der Erfindung. Dieses Sensorgerät 1 weist einen Energiesammler 2, eine Gleichspannungswandlerbaugruppe 3 und Energiesenken 4a, 4b und 4c auf. Der Energiesammler ist beispielsweise ein Energiesammler, der mindestens eine Photovoltaikzelle aufweist. Am Ausgang des Energiesammlers 2 steht entweder direkt eine Gleichspannung oder eine gleichgerichtete Wechselspannung zur Verfügung. Diese Gleichspannung wird über einen Leistungsmanager, der Impedanzanpassungsmittel 5 und einen ersten Gleichspannungswandler 6 aufweist, einem wiederaufladbaren Energiespeicher 7 zur Verfügung gestellt und im Normalbetrieb des autonomen drahtlosen Sensorgerätes, d.h. nach Beendigung der Anlaufphase, zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel drei Gleichspannungswandler 3a, 3b und 3c aufweist. Jeder dieser Gleichspannungswandler stellt an seinem Ausgang eine andere Gleichspannung zur Verfügung. Die Gleichspannungswandler 3a und 3b sind in Reihe hintereinander angeordnet. Der Gleichspannungswandler 3c ist parallel zu den Gleichspannungswandlern 3a und 3b geschaltet.

An den Ausgang des Gleichspannungswandlers 3a ist die Energiesenke 4a angeschlossen, an den Ausgang des Gleichspannungswandlers 3b die Energiesenke 4b und an den Ausgang des Gleichspannungswandlers 3c die Energiesenke 4c. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b. Die am Ausgang des Gleichspannungswandlers 3c bereitgestellte Gleichspannung entspricht der minimal notwendigen Versorgungsgleichspannung der Energiesenke 4c.

Die minimal notwendigen Versorgungsgleichspannungen der Energiesenken 4a, 4b und 4c sind voneinander verschieden.

Folglich werden bei dem in der Figur 3 gezeigten Ausführungsbeispiel in Reihe zueinander und parallel zueinander geschaltete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Energiesenken eines Sensorgerätes minimal benötigte Versorgungsgleichspannungen handelt.

Alternativ zu dem in der Figur 3 dargestellten Ausführungsbeispiel können an die Ausgänge der Gleichspannungswandler 3a, 3b und 3c auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 3 dargestellten Ausführungsbeispiel besteht darin, mehr in Reihe geschaltete und/oder mehr parallel geschaltete Gleichspannungswandler vorzusehen, um noch mehr verschiedene Gleichspannungen bereitzustellen, die jeweils einer oder mehreren Energiesenken zur Verfügung gestellt werden, um diese mit der jeweils benötigten minimalen Versorgungsgleichspannung zu versorgen.

Um in der Anlaufphase des vorstehend beschriebenen autonomen drahtlosen Sensorgerätes dafür Sorge zu tragen, dass das Laden des aufladbaren Energiespeichers 7 bereits zu einem früheren Zeitpunkt begonnen werden kann als bei bekannten Vorrichtungen, weist das autonome drahtlose Sensorgerät des Weiteren einen Ladekanal 14 auf. Dieser Ladekanal 14 ist parallel zum Leistungsmanager, zu welchem die Impedanzanpassungsmittel 5 und der Gleichspannungswandler 6 gehören, angeordnet. Er weist in seinem Eingangsbereich, der an den Ausgang des Energiesammlers 2 angeschlossen ist, einen ersten Schalter 9 auf. Bei durchlässig geschaltetem erstem Schalter 9 ist der Ladekanal 14 über den ersten Schalter 9 mit dem Ausgang des Energiesammlers 2 verbunden. Bei geöffnetem erstem Schalter ist der Ladekanal 14 mittels des Schalters 9 vom Ausgang des Energiesammlers 2 getrennt. Des Weiteren weist der Ladekanal 14 in seinem Ausgangsbereich, der an den wiederaufladbaren Energiespeicher 7 angeschlossen ist, einen zweiten Schalter 10 auf. Bei durchlässig geschaltetem zweitem Schalter 10 ist der Ladekanal 14 über den zweiten Schalter 10 mit dem wiederaufladbaren Energiespeicher 7 verbunden. Bei geöffnetem zweitem Schalter 10 ist der Ladekanal 14 mittels des zweiten Schalters 10 vom wiederaufladbaren Energiespeicher 7 getrennt. Zwischen dem ersten Schalter 9 und dem zweiten Schalter 10 ist im Ladekanal 14 eine Ladepumpe 11 angeordnet, mittels welcher bei durchlässig geschalteten Schaltern 9 und 10 die vom Energiesammler 2 bereitgestellte Gleichspannung auf einen höheren Spannungswert umgesetzt werden kann. Mit dieser Gleichspannung, die einen höheren Spannungswert aufweist, wird in der Anlaufphase des autonomen drahtlosen Sensorgerätes der wiederaufladbare Energiespeicher 7 geladen. Des Weiteren weist das in der Figur 1 dargestellte autonome drahtlose Sensorgerät zwischen dem Ausgang des Energiesammlers 2 und dem Leistungsmanager 5,6 einen dritten Schalter 8 auf. Bei geöffnetem drittem Schalter 8 ist der Energiemanager vom Ausgang des Energiesammlers abgetrennt. Dies ist in der Anlaufphase der Fall. Bei durchlässig geschaltetem drittem Schalter 8 ist der Leistungsmanager 5,6 mit dem Ausgang des Energiesammlers verbunden. Dies ist nach Beendigung der Anlaufphase der Fall.

Des Weiteren ist aus der Figur 2 ersichtlich, dass der Gleichspannungswandler 6 einen Ladezustandspin 6a aufweist, an welchem ein Bestätigungssignal ausgegeben wird, sobald der Leistungsmanager 5, 6 arbeitet. Ferner ist aus der Figur 2 ersichtlich, dass an den wiederaufladbaren Energiespeicher 7 ein vom wiederaufladbaren Energiespeicher 7 spannungsversorgter Komparator 12 angeschlossen ist, welcher ein an einem Ladezustandspin 7a bereitgestelltes Ladezustandssignal des wiederaufladbaren Energiespeichers mit einem internen Referenzsignal r vergleicht. Übersteigt das Ladezustandssignal das interne Referenzsignal, dann zeigt dies an, dass der wiederaufladbare Energiespeicher 7 einen Ladezustand erreicht hat, welcher darauf schließen lässt, dass der Energiesammler 2 an seinem Ausgang ein Gleichspannungssignal bereitstellt, das eine Inbetriebnahme des Leistungsmanagers ermöglicht. Dies wird durch das am Ausgang des Komparators 12 bereitgestellte Bestätigungssignal b bestätigt. Das Ausgangssignal des Komparators 12 wird dazu verwendet, dem dritten Schalter 8, mittels welchem in der Anlaufphase der Energiemanager vom Energiesammler getrennt war, ein Steuersignal s8 zuzuführen, welches den dritten Schalter 8 in seinen leitenden Zustand bringt, so dass der Leistungsmanager 5,6 über den leitenden Schalter 8 mit dem Ausgang des Energiesammlers 2 verbunden ist. Wird dann auch durch das am Ladezustandspin 6a des Gleichspannungswandlers 6 bereitgestellte Bestätigungssignal angezeigt, dass der Leistungsmanager 5,6 seinen Arbeitsbetrieb aufgenommen hat, dann werden den Schaltern 9 und 10 Steuersignale s9 und s10 zur Verfügung gestellt, durch welche diese Schalter geöffnet werden, so dass der Ladekanal 14 sowohl vom Energiesammler 2 als auch vom wiederaufladbaren Energiespeicher 7 abgetrennt wird. Damit ist die Anlaufphase beendet und die Energieversorgung des wiederaufladbaren Energiespeichers 7 erfolgt über den Energiemanager, der die Impedanzanpassungsmittel 5 und den Spannungswandler 6 aufweist.

Der wesentliche Vorteil der vorstehend beschriebenen Vorgehensweise besteht darin, dass die Ladepumpe 11 bereits bei niedrigerer Ausgangsgleichspannung des Energiesammlers und damit zu einem früheren Zeitpunkt in der Anlaufphase arbeitet als der Energiemanager. Somit kann in der Anlaufphase des autonomen drahtlosen Sensorgerätes durch eine Verwendung des oben beschriebenen Ladekanals 14 bereits zu einem früheren Zeitpunkt mit dem Aufladen des wiederaufladbaren Energiespeichers begonnen werden als ohne Verwendung eines derartigen Ladekanals. Dies wiederum hat zur Folge, dass auch den an den wiederaufladbaren Energiespeicher angeschlossenen Energiesenken des autonomen drahtlosen Sensorgerätes bereits zu einem früheren Zeitpunkt die von ihnen jeweils benötigte Versorgungsgleichspannung zur Verfügung gestellt werden kann als bei bekannten autonomen drahtlosen Sensorvorrichtungen.

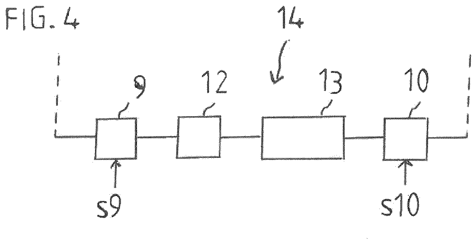

Die Figur 4 zeigt eine Blockdarstellung einer alternativen Ausführungsform für den anhand der Figuren 1 bis 3 erläuterten Ladekanal 14. Bei dieser alternativen Ausführungsform wird anstelle der in den Figuren 1 bis 3 gezeigten Ladepumpe 11 ein Aufwärtswandler 13 verwendet. Zwischen diesem Aufwärtswandler 13 und dem ersten Schalter 9 ist ein Transformator 12 vorgesehen. Auch mittels dieser Anordnung kann die am Ausgang des Energiesammlers 2 zur Verfügung stehende Gleichspannung auf einen höheren Spannungswert umgesetzt werden. Auch mittels dieser Anordnung kann in der Anlaufphase des autonomen drahtlosen Sensorgerätes bereits zu einem früheren Zeitpunkt mit der Ladung des wiederaufladbaren Energiespeichers 7 begonnen werden als ohne Verwendung eines derartigen Ladekanals.

### Bezugszeichenliste:

- 1: Autonomes drahtloses Sensorgerät
- 2: Energiequelle
- 3: Gleichspannungswandlerbaugruppe
- 3a: Gleichspannungswandler
- 3b: Gleichspannungswandler
- 3c: Gleichspannungswandler
- 4a: Energiesenke
- 4b: Energiesenke
- 4c: Energiesenke
- 5: Impedanzanpassungsmittel
- 6: Gleichspannungswandler
- 6a: Ladezustandspin
- 7: wiederaufladbarer Energiespeicher
- 7a: Ladezustandspin
- 8: Schalter
- 9: Schalter
- 10: Schalter
- 11: Ladepumpe
- 12: Transformator
- 13: Aufwärtswandler
- 14: Ladekanal
- b: Bestätigungssignal
- r: Referenzspannung

## Patentansprüche

1. Anlaufverfahren für ein autonomes drahtloses Sensorgerät (1), welches einen Energiesammler (2), einen mit dem Energiesammler verbundenen, einen Gleichspannungswandler aufweisenden Leistungsmanager (5, 6), einen mit dem Leistungsmanager verbundenen wiederaufladbaren Energiespeicher (7) und an den wiederaufladbaren Energiespeicher angeschlossene Energiesenken (4a, 4b,4c) aufweist, mit folgenden Schritten:
- Abtrennen des Leistungsmanagers (5, 6) vom Ausgang des Energiesammlers (2),
- Verbinden des wiederaufladbaren Energiespeichers (7) mit dem Energiesammler (2) über einen parallel zum Leistungsmanager angeordneten Ladekanal (14),
- Erhöhung der am Ausgang des Energiesammlers (2) bereitgestellten Spannung im Ladekanal (14) mittels einer Ladepumpe (11) oder eines Aufwärtswandlers (13),
- Vergleichen des Ladezustands des Energiespeichers (7) mit einem vorgegebenen Schwellenwert,
- Verbinden des Leistungsmanagers (5, 6) mit dem Ausgang des Energiesammlers (2), wenn der Ladezustand des Energiespeichers (7) den vorgegebenen Schwellenwert überschreitet, und
- Abtrennen des Ladekanals (14) sowohl vom Energiesammler (2) als auch vom wiederaufladbaren Energiespeicher (7), wenn ein an einem Ladezustandspin (6a) des Gleichspannungswandlers (6) bereitgestelltes Bestätigungssignal anzeigt, dass der Leistungsmanager (5,6) seinen Arbeitsbetrieb aufgenommen hat.

2. Anlaufverfahren nach Anspruch 1, mit folgendem weiteren Schritt:
- Abtrennen des wiederaufladbaren Energiespeichers (7) vom Energiesammler (2) durch Unterbrechen des Ladekanals (14).

3. Autonomes drahtloses Sensorgerät (1), welches aufweist:
- einen Energiesammler (2),
- einen mit dem Energiesammler verbundenen, einen Gleichspannungswandler aufweisenden Leistungsmanager (5, 6),
- einen mit dem Leistungsmanager verbundenen wiederaufladbaren Energiespeicher (7),
- an den wiederaufladbaren Energiespeicher (7) angeschlossene Energiesenken (4a, 4b, 4c) und
- einen parallel zum Leistungsmanager angeordneten Ladekanal (14), der zwischen dem Ausgang des Energiesammlers (2) und dem wiederaufladbaren Energiespeicher (7) angeordnet ist, eine Ladepumpe (11) oder einen Aufwärtswandler (13) aufweist und vom Ausgang des Energiesammlers abtrennbar und mit dem Ausgang des Energiesammlers verbindbar ist, wobei
das autonome drahtlose Sensorgerät zur Durchführung eines Anlaufverfahrens nach Anspruch 1 oder 2 ausgebildet ist.

4. Autonomes drahtloses Sensorgerät nach Anspruch 3, bei welchem der Ladekanal (14) einen mit dem Ausgang des Energiesammlers (2) verbundenen ersten Schalter (9) aufweist.

5. Autonomes drahtloses Sensorgerät nach Anspruch 3 oder 4, bei welchem der Ladekanal (14) einen mit dem Eingang des wiederaufladbaren Energiespeichers (7) verbundenen zweiten Schalter (9) aufweist.

6. Autonomes drahtloses Sensorgerät nach einem der Ansprüche 3 bis 5, bei welchem im Ladekanal (14) vor dem Aufwärtswandler ein Transformator (12) vorgesehen ist.

7. Autonomes drahtloses Sensorgerät nach einem der Ansprüche 3 bis 6, bei welchem der Leistungsmanager Impedanzanpassungsmittel (5) und einen Spannungswandler (6) aufweist.

8. Autonomes drahtloses Sensorgerät nach einem der Ansprüche 3 bis 7, bei welchem zwischen dem Ausgang des Energiesammlers (2) und dem Leistungsmanager ein dritter Schalter (8) angeordnet ist.

9. Autonomes drahtloses Sensorgerät nach einem der Ansprüche 3 bis 8, bei welchem die Energiesenken (4a, 4b, 4c) über eine Spannungswandlerbaugruppe (3) mit dem aufladbaren Energiespeicher (7) verbunden sind.

10. Autonomes drahtloses Sensorgerät nach Anspruch 9, bei welchem die Spannungswandlerbaugruppe mehrere parallel oder in Reihe zueinander geschaltete Spannungswandler (3a, 3b, 3c) aufweist.

11. Autonomes drahtloses Sensorgerät nach einem der Ansprüche 3 bis 10, bei welchem der Gesamtenergiebedarf der Energiesenken im Bereich von 10 µW bis 1 mW liegt.

12. Verwendung eines autonomen drahtlosen Sensorgerätes nach einem der Ansprüche 3 bis 11 im Bereich der Gebäudeautomation.

## Claims

1. Start-up method for an autonomous wireless sensor device (1) having an energy collector (2), a power manager (5, 6) which is connected to the energy collector and has a DC-DC converter, a rechargeable energy store (7) connected to the power manager, and energy sinks (4a, 4b, 4c) connected to the rechargeable energy store, having the following steps of:
- disconnecting the power manager (5, 6) from the output of the energy collector (2),
- connecting the rechargeable energy store (7) to the energy collector (2) via a charging channel (14) arranged parallel to the power manager,
- increasing the voltage provided at the output of the energy collector (2) in the charging channel (14) by means of a charge pump (11) or a boost converter (13),
- comparing the state of charge of the energy store (7) with a predefined threshold value,
- connecting the power manager (5, 6) to the output of the energy collector (2) if the state of charge of the energy store (7) exceeds the predefined threshold value, and
- disconnecting the charging channel (14) both from the energy collector (2) and from the rechargeable energy store (7) if a confirmation signal provided at a state of charge pin (6a) of the DC-DC converter (6) indicates that the power manager (5, 6) has started its working operation.

2. Start-up method according to Claim 1, having the following further step of:
- disconnecting the rechargeable energy store (7) from the energy collector (2) by interrupting the charging channel (14).

3. Autonomous wireless sensor device (1) having:
- an energy collector (2),
- a power manager (5, 6) which is connected to the energy collector and has a DC-DC converter,
- a rechargeable energy store (7) connected to the power manager,
- energy sinks (4a, 4b, 4c) connected to the rechargeable energy store (7), and
- a charging channel (14) which is arranged parallel to the power manager and is arranged between the output of the energy collector (2) and the rechargeable energy store (7), has a charge pump (11) or a boost converter (13) and can be disconnected from the output of the energy collector and can be connected to the output of the energy collector, wherein
the autonomous wireless sensor device is designed to carry out a start-up method according to Claim 1 or 2.

4. Autonomous wireless sensor device according to Claim 3, in which the charging channel (14) has a first switch (9) connected to the output of the energy collector (2).

5. Autonomous wireless sensor device according to Claim 3 or 4, in which the charging channel (14) has a second switch (9) connected to the input of the rechargeable energy store (7).

6. Autonomous wireless sensor device according to one of Claims 3 to 5, in which a transformer (12) is provided in the charging channel (14) upstream of the boost converter.

7. Autonomous wireless sensor device according to one of Claims 3 to 6, in which the power manager has impedance matching means (5) and a voltage converter (6).

8. Autonomous wireless sensor device according to one of Claims 3 to 7, in which a third switch (8) is arranged between the output of the energy collector (2) and the power manager.

9. Autonomous wireless sensor device according to one of Claims 3 to 8, in which the energy sinks (4a, 4b, 4c) are connected to the chargeable energy store (7) via a voltage converter assembly (3).

10. Autonomous wireless sensor device according to Claim 9, in which the voltage converter assembly has a plurality of voltage converters (3a, 3b, 3c) connected in parallel or in series.

11. Autonomous wireless sensor device according to one of Claims 3 to 10, in which the total energy requirement of the energy sinks is in the range from 10 µW to 1 mW.

12. Use of an autonomous wireless sensor device according to one of Claims 3 to 11 in the field of building automation.

## Revendications

1. Procédé de démarrage d'un dispositif capteur autonome sans fil (1) qui comporte un collecteur d'énergie (2), un gestionnaire de puissance (5, 6) relié au collecteur d'énergie et comportant un convertisseur de tension continue, un accumulateur d'énergie rechargeable (7) relié au gestionnaire de puissance et des puits d'énergie raccordés à l'accumulateur d'énergie rechargeable (4a, 4b, 4c), ledit procédé comprenant les étapes suivantes :
- déconnecter le gestionnaire de puissance (5, 6) de la sortie du collecteur d'énergie (2),
- relier l'accumulateur d'énergie rechargeable (7) au collecteur d'énergie (2) par le biais d'un canal de charge (14) disposé parallèlement au gestionnaire de puissance,
- élever la tension, fournie à la sortie du collecteur d'énergie (2), dans le canal de charge (14) au moyen d'une pompe de charge (11) ou d'un convertisseur-élévateur (13),
- comparer l'état de charge de l'accumulateur d'énergie (7) à une valeur seuil spécifiée,
- relier le gestionnaire de puissance (5, 6) à la sortie du collecteur d'énergie (2) lorsque l'état de charge de l'accumulateur d'énergie (7) dépasse la valeur seuil spécifiée, et
- déconnecter le canal de charge (14) aussi bien du collecteur d'énergie (2) que de l'accumulateur d'énergie rechargeable (7) lorsqu'un signal de confirmation fourni sur une broche d'état de charge (6a) du convertisseur de tension continue (6) indique que le gestionnaire de puissance (5, 6) a commencé à fonctionner.

2. Procédé de démarrage selon la revendication 1, comprenant l'étape supplémentaire suivante :
- déconnecter l'accumulateur d'énergie rechargeable (7) du collecteur d'énergie (2) par interruption du canal de charge (14).

3. Dispositif capteur autonome sans fil (1), lequel comporte :
- un collecteur d'énergie (2),
- un gestionnaire de puissance (5, 6) relié au collecteur d'énergie et comportant un convertisseur de tension continue,
- un accumulateur d'énergie rechargeable (7) relié au gestionnaire de puissance,
- des puits d'énergie (4a, 4b, 4c) raccordés à l'accumulateur d'énergie rechargeable (7) et
- un canal de charge (14) qui est disposé parallèlement au gestionnaire de puissance, qui est disposé entre la sortie du collecteur d'énergie (2) et l'accumulateur d'énergie rechargeable (7), qui comporte une pompe de charge (11) ou un convertisseur-élévateur (13) et qui peut être déconnecté de la sortie du collecteur d'énergie et qui peut être relié à la sortie du collecteur d'énergie,
le dispositif capteur autonome sans fil étant conçu pour mettre en œuvre un procédé de démarrage selon la revendication 1 ou 2.

4. Dispositif capteur autonome sans fil selon la revendication 3, le canal de charge (14) comportant un premier commutateur (9) relié à la sortie du collecteur d'énergie (2).

5. Dispositif capteur autonome sans fil selon la revendication 3 ou 4, le canal de charge (14) comportant un deuxième commutateur (9) relié à l'entrée de l'accumulateur d'énergie rechargeable (7).

6. Dispositif capteur autonome sans fil selon l'une des revendications 3 à 5, un transformateur (12) étant prévu dans le canal de charge (14) en amont du convertisseur-élévateur.

7. Dispositif capteur autonome sans fil selon l'une des revendications 3 à 6, le gestionnaire de puissance comportant des moyens d'adaptation d'impédance (5) et un convertisseur de tension (6).

8. Dispositif capteur autonome sans fil selon l'une des revendications 3 à 7, un troisième commutateur (8) étant disposé entre la sortie du collecteur d'énergie (2) et le gestionnaire de puissance.

9. Dispositif capteur autonome sans fil selon l'une des revendications 3 à 8, les puits d'énergie (4a, 4b, 4c) étant reliés à l'accumulateur d'énergie rechargeable (7) par le biais d'un ensemble convertisseur de tension (3).

10. Dispositif capteur autonome sans fil selon la revendication 9, l'ensemble convertisseur de tension comportant une pluralité de convertisseurs de tension (3a, 3b, 3c) montés en parallèle ou en série les uns avec les autres.

11. Dispositif capteur autonome sans fil selon l'une des revendications 3 à 10, le besoin énergétique total des puits d'énergie étant compris entre 10 µW et 1 mW.

12. Utilisation d'un dispositif capteur autonome sans fil selon l'une des revendications 3 à 11 dans le domaine de la domotique.
